# EUROPEAN PATENT APPLICATION

(11) **EP 3 626 494 A1**
(43) Date of publication of application: **25.03.2020**
(21) Application number: 19198075.4
(22) Date of filing: 18.09.2019
(51) Int. Cl.: B60H 3/00, B60H 1/03, B60J 3/00, B60R 13/08

(54) **A PASSIVE VEHICLE CABIN INSULATION METHOD WITH CONSTANT TEMPERATURE AND ULTRA-LOW ENERGY CONSUMPTION**

(30) Priority: 21.09.2018 CN 201811107066
(71) Applicant: Wang Yulong, Chengdu Sichuan (CN)
(72) Inventor: WANG, Yulong, Chengdu, Sichuan (CN)
(74) Representative: Ipside

(57) **Abstract**

A passive vehicle cabin insulation method with constant temperature and ultra-low energy consumption. It accomplishes this through the implementation of several special features in different parts of the vehicle. These features include a layer of efficient heat insulation material, an airtight casing, windows insulated with multiple layers of vacuum, energy-saving, laminated glass, an anti-UV heat insulation coating, an efficient fresh air circulation and heat recovery system, a "broken bridge" structural design, and an anti-fog and hazy air purification system. The method insulates the vehicle sufficiently to deal with the heat of summer and the cold of winter. It also makes full use of passive renewable energy, and maintains a healthy and comfortable driving environment within the vehicle. Specifically, it maintains a constant temperature, constant humidity, constant oxygen levels, constant levels of air purity, and low noise, all while consuming a minimal amount of energy.

## Description

### Technical Field

This invention belongs to the field of traditional automobiles and alternative energy automobiles, and relates to a passive vehicle cabin insulation method with constant temperature and ultra-low energy consumption

### Background Technology

Though automobiles are of course an indispensable means of transportation in modern society, they are also an important source of air pollution and a key factor in rising levels of greenhouse gases. Achieving environmental protection goals requires reducing the oil consumption and gas emissions of automobiles. At the same time, a country's government should also work to develop the automobile industry, as it promotes economic development and helps to meet the needs of the people and improve their overall quality of life. Indeed, governments all over the world regard the development of energy-saving and environment-friendly vehicles as an important measure to reduce oil consumption, and protect the atmospheric environment. They work to achieve sustainable development in the automobile industry. This is done by maintaining the growth of automobile sales, and vigorously promoting the industrialization of pure electric vehicles and plug-in hybrid electric vehicles.

However, on the other hand, the kinetic energy of these energy-efficient, environmentally-responsible pure electric vehicles comes entirely from batteries. In addition to providing kinetic energy for vehicle propulsion, batteries also provide air conditioning in summer and heating in winter. Therefore, the effective driving distance of these energy-efficient, environmentally-responsible vehicles that rely on batteries for power is determined not only on the capacity of the batteries and the weight of the vehicle, but also on how much energy the vehicle needs for air conditioning and heating.

The existing technical problems of fuel or battery-powered vehicles are as follows. All vehicles have a heat wall separating the engine bay from the cabin, but not all vehicles are equipped with full body heat insulation that uses heat insulation material, an airtight casing, a "broken bridge" construction, and windows with multiple layers of insulated, laminated glass. Vehicles that don't implement these special features are incapable of passive heat insulation, waste huge amounts of energy, resulting in unnecessary environmental pollution. Especially for vehicles parked in an open-air parking lot, temperatures inside the vehicle can reach as high as 40-60°C in the summer, and as low as 10°C below zero in the winter. The temperature inside the vehicle varies so greatly because the vehicle body has no heat insulation system in place, and its metal case and glass windows cannot achieve high degrees of insulation. This results in the cabin temperature changing greatly in response to outside temperatures.

### Summary of the Invention

In view of the defects in the prior art mentioned above, the present invention provides a passive vehicle cabin insulation method with constant temperature and ultra-low energy consumption. The technical solutions of the present invention are as follows: A passive vehicle cabin insulation method with constant temperature and ultra-low energy consumption, comprising:
adding a high efficiency heat insulation material layer and an airtight casing into an interior of the body and doors of the vehicle;
using multiple layers of insulated, vacuum, energy-saving, photochromic, laminated glass as the glass of side windows, an skylight, and front and rear windshieldsvacuum;
pasting an anti-UV heat insulation coatingon the glass of the side windows, skylight, and front and rear windshields;
providing an efficient heat recovery and fresh air circulation system in an available space of the vehicle;
providing an anti-fog and hazy air purification and circulation system and a vehicle-mounted oxygen generation system, in a front cabin of the vehicle.

Furthermore, covering the entirety of the roof, doorposts, doors, and floor of the vehicle with the high-efficiency heat insulation material layer.

Furthermore, making the airtight casing have a high airtightness by bonding a water-proof, airtight, permeable film.

Furthermore, using some broken bridges structural on the body and doors of the vehicle. The body and doors of the vehicle are designed without heat bridge, and the high-strength heat-proof bridge connectors is used to prevent the conduction of the heat source.

Furthermore, the side windows, skylight, and front and rear windshields are made of multiple layers of insulated, vacuum, energy-saving, photochromic, laminated glass.

Furthermore, installing the efficient heat recovery and fresh air circulation system near the automobile engine accessories area or in the trunk.

Furthermore, installing the anti-fog and hazy air purification and circulation system and vehicle-mounted oxygen generation system near the front dashboard and at the back seat heating and cooling ventilation openings in the vehicle cabin.

Furthermore, installing an internal and external intercom amplification system with a microphone on the top of the vehicle,, and connecting the internal and external intercom amplification system with a smartphone for long-distance dialogue and control.

The beneficial effects of the invention are as follows.

The technology of the invention can be implemented in a fossil fuel-powered automobile. It is more applicable for alternative energy automobiles, and provides greater support for energy-efficient, environmentally responsible automobiles. In terms of energy savings, less air conditioning can increase mileage in alternative energy vehicles. It can also reduce transportation costs by saving a large amount of energy, and provide an energy-saving, comfortable, healthy, and environmentally friendly driving environment for drivers and passengers. In terms of environmental protection, ultra-low energy consumption itself is a form of environmental protection, so the concepts of low-carbon, green energy, and energy efficiency are implemented in every vehicle. In terms of health, the invention's people friendly nature can be seen in the travel and driving experience it makes possible, and a new perfect solution for redefining the vehicle is put forward in low noise, quiet ride, constant temperature, constant humidity, and intelligent control.

### Brief Description of the Drawings

In order to illustrate the technical schemes in the embodiments of the Invention or in prior art more clearly, the drawings required in description of the embodiments or prior art will be introduced briefly as follows. Obviously, the drawings described below are just a part of the embodiments of the Invention. A person skilled in the art is able to obtain other drawings according to these drawings without any creative work.

Fig. 1 is a schematic flow chart of a specific embodiment of a passive vehicle cabin insulation method of the present invention;

**Detailed Description of the Preferred Embodiments** A clear and full description of the technical schemes of the embodiments of the invention will be given in combination of the drawings of the embodiments of the Invention as follows. Obviously, the described embodiments are just a part rather than the whole of the embodiments of the Invention. Based on the embodiments of the Invention, any other embodiments obtained by a person skilled in the art without any creative work will fall within the protection scope of the Invention.

The technical scheme of the invention is specifically realized in this way. The basic principle of passive vehicle cabin insulation method with constant temperature and ultra-low energy consumption is to solve energy efficiency.

As shown in Fig. 1, in the specific embodiment of the invention, a passive vehicle cabin insulation method with constant temperature and ultra-low energy consumption, comprising:
adding an high-efficiency heat insulation material layer and an airtight casing into a body of the vehicle;
using multiple layers of insulated, vacuum, energy-saving, photochromic, laminated glass as the glass of side windows, an skylight, and front and rear windshields;
pasting an anti-UV heat insulation coating on the glass of the side windows, an skylight, and front and rear windshields;
providing an efficient heat recovery and fresh air circulation system in an available space of the vehicle;
providing an anti-fog and hazy air purification and circulation system and a vehicle-mounted oxygen generation system in a front cabin of the vehicle.

Preferably, covering the entirety of the roof, door posts, doors and floor of the vehicle with the high-efficiency heat insulation material layer.

Preferably, making the airtight casing have a high air tightness by bonding a water-proof, airtight, permeable film.

Preferably, using some broken bridges structural on the body and doors of the vehicle.

Preferably, the side windows, skylight, and front and rear windshields are made of multiple layers of insulated, vacuum, energy-saving, photochromic, laminated glass.

Preferably, installing the efficient heat recovery and fresh air circulation system near the automobile engine or in the trunk.

In the embodiment of the invention, preferably installing the anti-fog and hazy air purification and circulation system and vehicle-mounted oxygen generation system near the front dashboard and the rear seat heating and cooling ventilation openings in the vehicle cabin.

Furthermore, wherein, installing an internal and external intercom amplification system with a microphone on the top of the vehicle, and connecting the internal and external intercom amplification system with a smartphone for long-distance dialogue and control.

In the specific embodiment of the invention, specifically, a heat insulation material layer in an interior of the body and doors of the vehicle, an airtight casing, a broken bridge structure; the side windows, skylight, and front and rear windscreens are made of multiple layers of highly energy-efficient, insulated, vacuum, laminated, and photochromic glass; an anti-UV heat insulation coating, an efficient heat recovery and fresh air circulation system, an anti-fog and hazy air purification and circulation system, and a vehicle-mounted oxygen generation system have been added. Among them, the heat insulation material layer is made of A-grade fireproof, efficient, and durable heat insulation material (such as aerogels materials, polyurethane foamed plastic, etc.), and is installed mainly inside the vehicle roof, door posts, doors and flooring. The vehicle body and doors of the vehicle implement the "broken bridge" structure, and all connecting points generating heat bridges are changed. The airtight casing achieves high-strength adhesion and sealing by using a water-proof, airtight, permeable film adhered to the inside and outside of the glass, along with adhesive and sealing tape. This minimizes the intake of harmful gas and dust from outside the vehicle and improves sound insulation and noise reduction. The passive energy-saving side windows, skylight, and front and rear windscreens are made of multiple layers of insulated, vacuum, energy-saving, photochromic, laminated glass (or fill the laminated glass with a highly transparent and transparent material. , such as aerogel glass). The efficient anti-UV heat insulation metal coating is adhered to the glass of the window, mainly to prevent direct sunlight from coming through the window and causing obvious changes in cabin temperature. The efficient heat recovery and fresh air circulation system is installed near the engine of the vehicle or in the trunk to ensure that the fresh air imported from the outside is not cold in winter and the air imported from the outside is not hot in summer. The anti-fog and hazy air purification and circulation system and the vehicle-mounted oxygen generation system are placed near the front dashboard or the back seat heating and cooling ventilation openings in the vehicle cabin. The anti-fog and hazy air purification and circulation system ensures that the air entering the vehicle is clean and free of pollutants. The vehicle-mounted oxygen generation system is mainly responsible for providing clean oxygen as required in the vehicle. The "oxygen bar" is especially necessary for driving in high elevations to ensure there is a sufficient oxygen supply for the driver and passengers in the airtight vehicle. This also helps to achieve higher standards of green technology, energy-efficiency, low-carbon output, and environmental protection.

The invention is mainly applicable to alternative energy automobiles and internal combustion engine automobiles. It not only directly solves the problem of passive, ultra-low energy consumption heat insulation for automobiles, but also combats the problems of vehicle cabin heat loss in the winter and vehicle cabin heat retention in the summer.

Because of its high performance relative to its cost, the ability of this system to maintain a constant vehicle cabin temperature while consuming very low amounts of energy (heating energy demand amount< 70 kWh/m2 9a) is something that is very valuable for market development and promotion. In particular, by using this method of passive energy saving, alternative energy vehicles can reduce the energy cost of using air conditioning, save on electric output, increase their mileage, and improve overall energy efficiency. This system is able to solve the issue of energy efficiency due to its implementation of several key technologies. These technologies include outstanding vehicle body insulation materials, windows that utilize innovative multi-layered, vacuum, laminated glass, intelligent control, the integration of a constant temperature system, an air purification system, a heat recovery and fresh air circulation circulation system, an oxygen generation system, and the fact that the vehicle body implements "broken bridge" construction.

The benefit of using the passive vehicle cabin insulation method with constant temperature and ultra-low energy consumption is that it does not require long time to heat or cool the cabin after turning on the heating or cooling systems. Essentially, it depends on the passive collection of energy from various heat sources to adjust the microclimate in the vehicle and maintain a comfortable temperature. For example, this system makes use of and recovers the thermal energy produced by the sun, the human body, the air conditioning system, the thermal energy recovery device, and the outside air that is brought into the cabin when the vehicle door is opened. Coupled with the efficient heat insulation material, the "broken bridge" construction of the vehicle body, and airtight seals, the system is very effective.

The multiple layers of insulated, vacuum, energy-saving, photochromic, laminated glass used by the side windows, skylight, front and rear windshields also protects against radiation. Vacuum magnetron sputtering is used to apply between one and two layers of 10-20NM metal silver coating to the glass. Nickel naturally repels radiation, and it can reduce the amount of radiation that is let in by vehicle windows from 084 to 01 or even lower. It can also reduce heat loss through radiation by nearly 90%, helping to increase the vehicle's energy efficiency. In the summer, it can allow visible light (sunlight) to pass through while also blocking thermal light (infrared radiation). This means it can greatly reduce the time it takes for the cabin temperature to change after adjusting the temperature settings. In the winter, it can let in visible light energy and reflect thermal light energy (infrared radiation heat) back into the vehicle, so that it is not lost to the outside through the glass windows. Therefore, it can keep the inside of the vehicle warmer without the need for a continuous heating supply, and greatly reduces time it takes for the cabin temperature to change after adjusting the temperature settings in winter. After the driver or passenger opens the door and enters the vehicle, only a few minutes of air conditioning or heating is needed to reach the preset temperature in the vehicle, and the insulation in the vehicle allows it to maintain it temperature for more than 24 hours without opening the door. At the same time, the multiple layers of insulated, vacuum, energy-saving, photochromic, laminated glass can also effectively block the transmission of sound, significantly reduce noise, and effectively prevent the invasion of fog and haze. The multiple layers of insulated, vacuum, energy-saving, photochromic, laminated glass is highly effective at blocking ultraviolet light (up to 99% and above). With lighting coming in from the side windows, skylight, and front and rear windshields, each equipped with the multiple layers of insulated, vacuum, energy-saving, photochromic, laminated glass, you can truly enjoy a "sunshine bath" without feeling the heat on your skin. This also reduces sun-damage to articles inside the vehicle.
the passive vehicle cabin insulation method with constant temperature and ultra-low energy consumption , which maintains a constant temperature while consuming a minimum amount of energy, is based on the basic principles of vacuum flasks and refrigerators. Using these principles, the technology prevents three modes of heat loss: 1. Convection: In order to control air convection, all the windows and the skylight are fixed in a closed position (only the driver's seat and copilot's seat windows can be raised and lowered). This allows the car to maximize energy efficiency and maintain a constant temperature for longer. 2. Conduction: The vehicle body is equipped with thermal insulation materials on all sides. A layer of class A fire deterrent, highly efficient, durable, efficient, and energy-saving heat insulation material layer (e.g., efficiently insulated aerogel) is used. A "broken bridge" structural design for heat insulation and blocking is used for the entire vehicle body, including vehicle doors. The metal vehicle body shell is separated and connected by materials that do not easily conduct heat, such as resin, plastic, carbon fiber and modified nonferrous metals, so as to form a cavity that has a low coefficient of thermal conductivity. The eliminates the possibility of a heat bridge inside the frame and body of the vehicle, including the ceiling, floor, doors, and doorposts. The insulating effect is maximized, and the demand for heating and cooling in the vehicle is reduced. 3. Radiation: Installing windows that utilize multiple layers of insulated, vacuum, energy-saving, photochromic, laminated glass with a metal coating (two or three layers of glass, two layers of silver synthetic glass that have two hollow cavities or aerogel in the middle). These specialized windows can also shield against infrared rays and effectively insulate temperature, sound, dust, and water. Because the inner surface of the hollow glass is coated with a metal film, it transmits a high percentage of visible light and reflects a high percentage of infrared rays. It can filter out almost all the thermal energy transmitted by sunlight, while allowing the visible light to pass through. It can also reflect thermal radiation to improve heat insulation, so that the vehicle cabin is warm in winter and cool in summer. The rear side windows, the front and rear windshields, and the skylight, which utilize multiple layers of insulated, hollow, energy-saving, photochromic, laminated glass, are all permanently closed and cannot be opened. This is not the same in older vehicles, which use windows that can all be raised and lowered. Thanks to this, the windows' coefficient of thermal conductivity (K) can sink below 3W/(m²·K), half of that of ordinary vehicle windows. The sound insulation can reach 29 decibels and above, the system keeps the vehicle cabin air and watertight. The heat-resistant vacuum silver-plated laminated glass (or aerogel glass) used in the side windows, skylight, and front and rear windshields is separated. It can help improve the efficiency and speed of the air conditioning. The system is able to reach any desired temperature setting within a few minutes of closing the door, at which point the system can go into automatic standby. The efficient heat recovery and fresh air circulation system supplies a sufficient flow of purified fresh air, further increasing the energy efficiency of the system. There is also little dust in the vehicle. A number of small resin or plastic connectors are set in the inner layers of the vehicles roof, doorposts, doors, and floors to prevent the conduction of heat source or cold source. No matter the external temperature, the connectors prevents it from affecting cabin temperature. Another function of this resin or plastic connector is connecting the outer case and inner case, which also functions as heat insulation, attachments, and connections. After a strict treatment of encasing these elements in an airtight casing, the inside of the vehicle will always stay completely dry, even if when the vehicle is submerged in water. Likewise, even if you place the vehicle in the middle of a raging fire, the temperature inside the vehicle will not rise, and the inside of the vehicle will not fill with smoke. With oxygen generation equipment, even if passengers are unable to escape the vehicle, they will be able to survive longer than they would in any other circumstances while they wait for rescue.

To summarize, to maximize passive heat insulation in the vehicle, the advanced insulation within the body of the vehicle, along with the multiple layers of insulated, laminated, glass present in each of the vehicle's windows, are two of the most important elements of this technology. The passive automobile insulation system, which is able to maintain a constant temperature while consuming a minimum amount of energy, is integrated with special new heat insulation material to break the mold of traditional vehicle structure. Using this technology, the rate of passive heat insulation and energy efficiency in the vehicle cabin can exceed 90%. Moreover, while running or while parked, the vehicle can maintain a constant temperature of about 22°C all year round.

Although applications of the technology found in this invention have just been shown and described above, it is understandable that ordinary technicians in the field might change, modify, replace, or vary these applications in a variety of ways without deviating from the principles and spirit of this invention. The scope of this invention is limited by the claims attached and their equivalencies.

## Claims

1. A passive constant-temperature ultra-low-energy-consumption vehicle heat-preservation method, **characterized in that** the method comprises:
adding an efficient thermal-insulation and heat-preservation material layer and a high-airtightness enclosure structure, which are added into a vehicle shell interlayer;
using energy-saving windows, a roof window and front and rear windshields, which use temperature-shielding multi-glass hollow glass;
pasting a UV-resistant heat-preservation coating or pasted film, which is attached to the window glass;
providing an efficient heat recovery fresh air system, which is provided at an available space of a vehicle; and
providing an anti-haze purification air circulation system and a vehicle-mounted oxygen generation system, which are installed inside a front compartment of the vehicle.

2. The passive constant-temperature ultra-low-energy-consumption vehicle heat-preservation method according to claim 1, **characterized in that** the efficient thermal-insulation and heat-preservation material layer strictly fully covers a vehicle roof, door pillars, doors and a floor

3. The passive constant-temperature ultra-low-energy-consumption vehicle heat-preservation method according to claim 1, **characterized in that** the high-airtightness enclosure structure uses a bonded inner-permeable, outer-permeable waterproof air permeable and impermeable film, an adhesive and a sealant strip to achieve high-strength airtightness.

4. The passive constant-temperature ultra-low-energy-consumption vehicle heat-preservation method according to claim 1, **characterized in that** the vehicle shell and the doors are of a broken bridge structure.

5. The passive constant-temperature ultra-low-energy-consumption vehicle heat-preservation method according to claim 1, **characterized in that** the efficient energy-saving windows, the roof window and the front and rear windshields use temperature-shielding multi-glass hollow glass with a coating or pasted film.

6. The passive constant-temperature ultra-low-energy-consumption vehicle heat-preservation method according to claim 1, **characterized in that** the efficient heat recovery fresh air system is installed at a vehicle engine accessory or a trunk.

7. The passive constant-temperature ultra-low-energy-consumption vehicle heat-preservation method according to claim 1, **characterized in that** the anti-haze purification air circulation system and the vehicle-mounted oxygen generation system are installed near a front dashboard and a rear-seat air inlet and outlet inside the vehicle.

8. The passive constant-temperature ultra-low-energy-consumption vehicle heat-preservation method according to claim 1, **characterized in that** the vehicle inside/outside intercommunication and public address system is installed at the top of the vehicle and is able to be connected to a smart phone for long-distance dialogue and control.
